# DEMANDE DE BREVET EUROPEEN

(11) **EP 0 941 909 A1**
(43) Date de publication de la demande: **15.09.1999**
(21) Numéro de dépôt: 99400573.4
(22) Date de dépôt: 09.03.1999
(51) Int. Cl.: B62D 1/18

(54) **Ensemble de colonne de direction réglable en position, par exemple pour véhicule automobile**

(30) Priorité: 11.03.1998 FR 9802989
(71) Demandeur: ECIA - EQUIPEMENTS ET COMPOSANTS POUR L'INDUSTRIE AUTOMOBILE, F-25400 Audincourt (FR)
(72) Inventeur: Hoblingre, André, 90380 Roppe (FR); Mouhot, Frédéric, 25420 Voujeaucourt (FR)
(74) Mandataire: Habasque, Etienne Joel Jean-François

(57) **Abrégé**

Cet ensemble comportant un corps de colonne (1) relié à ses extrémités à des moyens de fixation sur une structure de support (5), comportant des moyens d'accrochage (6) et des moyens de réglage (7) en position du corps (1), munis de moyens de blocage (8), déplaçables entre des positions de verrouillage et de déverrouillage, est caractérisé en ce que les moyens de fixation du corps (1) associés aux moyens de réglage (7), comportent au moins une biellette (9) de suspension du corps sur la structure, articulée à ses extrémités par rapport au corps (1) et à la structure (5), en ce que les moyens de réglage (7) sont interposés entre cette biellette (9) et une pièce de l'ensemble, corps (1) ou structure (5), et en ce que l'extrémité correspondante de la biellette de suspension (9) est articulée autour d'un organe de ces moyens de réglage.

## Description

La présente invention concerne un ensemble de colonne de direction réglable en position par exemple pour véhicule automobile.

On connaît déjà dans l'état de la technique, un certain nombre d'ensembles de ce type, qui comportent un corps de colonne de direction, dans lequel est disposé un arbre de direction, dont une extrémité est adaptée pour recevoir un volant de direction et dont une autre extrémité est adaptée pour être reliée au reste du mécanisme de direction du véhicule, par l'intermédiaire par exemple d'une articulation à la cardan.

Le corps de colonne est relié à proximité de chacune de ses extrémités, à des moyens de fixation sur une structure de support associée au reste de la structure du véhicule et comportant les uns, des moyens d'accrochage sur cette structure, et les autres, des moyens de réglage en position du corps par rapport à cette structure, munis de moyens de blocage en position déplaçables entre des positions de verrouillage et de déverrouillage pour permettre un réglage en position du corps et donc de l'ensemble de colonne par rapport au reste de la structure du véhicule, afin d'adapter la position du volant à la morphologie du conducteur.

D'une façon générale, les moyens d'accrochage prévus à l'une des extrémités du corps se présentent sous la forme d'un palier de guidage de celui-ci, articulé par exemple entre des flasques de la structure de support.

Les moyens de réglage prévus à proximité de l'autre extrémité du corps comprennent quant à eux par exemple un organe de montage solidaire du corps et monté déplaçable en position entre des flasques de la structure de support, et des moyens de blocage en position déplaçables entre des positions de verrouillage et de déverrouillage pour permettre un blocage en position du corps entre les flasques.

Différents exemples de réalisation de tels moyens de réglage ont été décrits dans l'état de la technique.

Le mode de réalisation le plus répandu de ces moyens de réglage est celui dans lequel les flasques de la structure de support et l'organe de montage relié au corps comportent des lumières croisées s'étendant par exemple perpendiculairement l'une par rapport à l'autre, ces lumières étant adaptées pour recevoir un tirant des moyens de blocage.

Différents modes de réalisation de ces moyens de blocage ont également été décrits dans l'état de la technique.

D'une façon générale, ces moyens de blocage comportent des moyens de serrage des flasques de la structure de support contre l'organe de montage du corps pour assurer le blocage du corps en position entre ceux-ci.

Ces moyens de serrage peuvent également présenter différentes structures appropriées comme par exemple à came, à excentrique, à bille, à genouillère, etc...

Les flasques de la structure de support peuvent alors comporter des lumières s'étendant sensiblement perpendiculairement à l'axe du corps de colonne, tandis que l'organe de montage de ce corps peut quant à lui comporter au moins une lumière s'étendant sensiblement parallèlement à l'axe du corps de colonne, ce qui permet, lorsque les moyens de blocage sont en position de déverrouillage, de déplacer le corps par rapport aux flasques et donc à la structure de support pour le régler en position.

Lorsque la position de réglage souhaitée est atteinte, l'utilisateur peut alors déplacer les moyens de blocage vers leur position de verrouillage pour assurer le blocage du corps en position .

Des moyens d'équilibrage du corps en position, constitués par exemple par un organe élastique peuvent également être interposés entre la structure de support et le corps.

Des moyens d'absorption d'énergie de choc par contrôle des déplacements du corps par rapport à la structure peuvent également être intégrés dans de tels ensembles pour réduire les risques de blessures des conducteurs de véhicule en cas de choc.

Enfin, des moyens de rétraction par exemple pyrotechniques peuvent également être utilisés dans certains ensembles pour assurer une rétraction de l'ensemble de colonne en cas de choc.

On conçoit cependant à la lumière de la description qui précède des ensembles de l'état de la technique, que ceux-ci présentent un certain nombre d'inconvénients, notamment au niveau des déplacements relatifs des moyens de blocage par rapport à la structure de support et au corps de colonne sur lequel sont accrochés par exemple des moyens de garnissage de cet ensemble de colonne, en forme de gaine, s'étendant généralement entre la planche de bord du véhicule et le volant de direction.

En effet, si les moyens de réglage présentent la structure décrite précédemment, dans laquelle les flasques de la structure de support comportent des lumières s'étendant à peu près perpendiculairement à l'axe du corps de colonne, l'organe de montage de celui-ci comportant au moins une lumière s'étendant à peu près parallèlement à cet axe, lors des réglages en position de ce corps, les moyens de blocage suivent les déplacements du corps lors d'un réglage en altitude mais restent fixes en position lors d'un réglage axial de celui-ci, dans la mesure où c'est l'organe de montage du corps et donc ce corps qui se déplacent par rapport au tirant des moyens de blocage pour permettre ce réglage.

On conçoit alors que si les moyens de garnissage de ce corps de colonne sont reliés à celui-ci, il est nécessaire de prévoir dans ces moyens de garnissage, une lumière de déplacement par exemple de la poignée de manoeuvre de ces moyens de blocage, si ceux-ci sont à commande manuelle par un utilisateur, assez grande pour permettre un déplacement relatif de cette poignée et des moyens de garnissage.

Or, ceci complique la structure et dégrade l'esthétique de ces moyens de garnissage.

Des problèmes analogues se posent si l'on décide d'implanter la poignée de manoeuvre des moyens de blocage dans la planche de bord du véhicule, en inversant par exemple la disposition des moyens de réglage décrits précédemment.

Le but de l'invention est donc de résoudre ces problèmes.

A cet effet, l'invention a pour objet un ensemble de colonne de direction réglable en position par exemple pour véhicule automobile, du type comportant un corps de colonne de direction dans lequel est disposé un arbre de direction et relié à proximité de chacune de ses extrémités à des moyens de fixation sur une structure de support associée au reste de la structure du véhicule et comportant les uns, des moyens d'accrochage sur cette structure, et les autres, des moyens de réglage en position du corps par rapport à cette structure, munis de moyens de blocage en position, déplaçables entre des positions de verrouillage et de déverrouillage pour permettre un réglage en position du corps et donc de l'ensemble de colonne, caractérisé en ce que les moyens de fixation de l'extrémité du corps de colonne sur la structure de support, associée aux moyens de réglage, comportent au moins une biellette de suspension du corps sur la structure de support, dont les extrémités sont articulées l'une par rapport au corps et l'autre par rapport à la structure de support, en ce que les moyens de réglage de la position du corps sont interposés entre cette biellette et une pièce correspondante de l'ensemble de colonne, corps de colonne ou structure de support, et en ce que l'extrémité correspondante de la biellette de suspension est articulée autour d'un organe de ces moyens de réglage.

L'invention sera mieux comprise à l'aide de la description qui va suivre, donnée uniquement à titre d'exemple et faite en se référant aux dessins annexés, sur lesquels :
- la Fig.1 représente un schéma synoptique illustrant un exemple de réalisation d'un ensemble de colonne selon l'invention;
- la Fig.2 représente une vue en bout de l'ensemble représenté sur la figure 1, illustrant la structure de moyens de réglage entrant dans la constitution d'un tel ensemble;
- la Fig.3 représente un schéma synoptique d'une variante de réalisation d'un ensemble de colonne selon l'invention;
- la Fig.4 représente une vue en bout de moyens d'articulation entrant dans la constitution de cet ensemble de colonne;
- la Fig.5 représente un schéma synoptique illustrant une autre variante de réalisation d'un ensemble de colonne selon l'invention; et
- la Fig.6 représente un détail de cet ensemble de colonne.

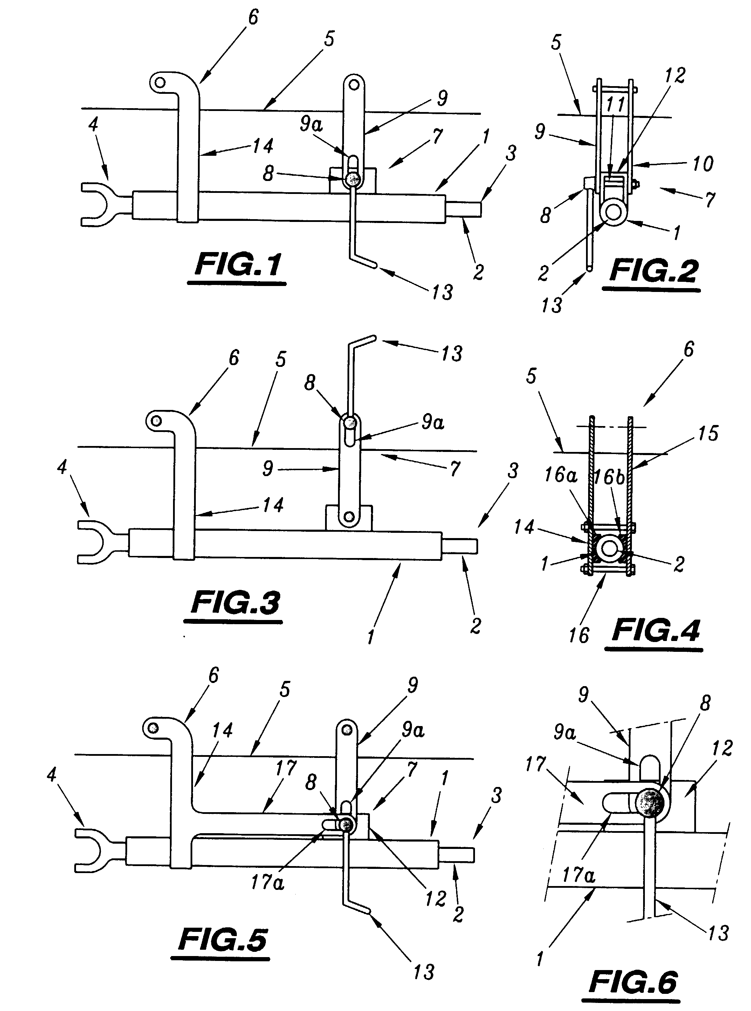

On a en effet représenté de façon schématique sur les figures 1 et 2, un exemple de réalisation d'un ensemble de colonne de direction réglable en position, notamment pour véhicule automobile.

Cet ensemble comporte de façon classique un corps de colonne de direction désigné par la référence générale 1, dans lequel est disposé un arbre de direction désigné par la référence générale 2.

Cet arbre de direction 2 est monté rotatif dans ce corps de colonne de manière appropriée et présente une première extrémité désignée par la référence générale 3, adaptée pour recevoir un volant de direction du véhicule et une seconde extrémité désignée par la référence générale 4, se présentant par exemple sous la forme d'une fourche de cardan, adaptée pour être reliée au reste du mécanisme de direction du véhicule, de façon classique.

Ce corps de colonne est relié à proximité de chacune de ses extrémités à des moyens de fixation sur une structure de support, désignée par la référence générale 5 sur ces figures, associée au reste de la structure du véhicule et qui comportent les uns, des moyens d'accrochage 6 sur cette structure et les autres, des moyens de réglage 7 en position du corps par rapport à cette structure. Ces moyens de réglage sont munis de moyens de blocage 8 en position, déplaçables entre des positions de verrouillage et de déverrouillage, pour permettre un réglage en position du corps et donc de l'ensemble de colonne, de façon classique.

Selon l'invention, les moyens de fixation de l'extrémité correspondante du corps sur la structure de support, c'est-à-dire celle associée aux moyens de réglage 7, comportent au moins une biellette de suspension 9 du corps sur la structure de support, dont les extrémités sont articulées l'une par rapport au corps, et l'autre par rapport à la structure de support, tandis que les moyens de réglage 7 de la position du corps sont interposés entre cette biellette de suspension 9 et l'une des pièces correspondantes de l'ensemble de colonne, corps de colonne ou structure de support, l'extrémité correspondante de la biellette de suspension étant articulée autour d'un organe de ces moyens de réglage.

Dans l'exemple de réalisation représenté sur ces figures 1 et 2, les moyens de réglage 7 sont interposés entre la biellette de suspension 9 et le corps de colonne de direction 1.

A cet effet, les moyens de blocage 8 sont solidaires du corps et l'extrémité correspondante de la biellette de suspension 9 comporte une lumière 9a de passage de l'organe correspondant des moyens de blocage autour duquel est articulée l'extrémité correspondante de la biellette 9. Ces moyens de blocage sont adaptés pour, en position de déverrouillage, autoriser un déplacement relatif de la biellette de suspension par rapport à l'organe, par déplacement relatif de cet organe dans cette lumière de cette biellette, afin de permettre un réglage en position du corps, et, en position de verrouillage, immobiliser la biellette de suspension par rapport à l'organe de ces moyens de blocage, afin de bloquer le corps et donc l'ensemble de colonne en position.

En fait, les moyens de fixation de cette extrémité du corps comportent avantageusement deux biellettes de suspension 9 et 10 disposées par exemple symétriquement de part et d'autre du corps de colonne 1, chaque biellette étant munie d'une lumière par exemple 9a de passage de l'organe correspondant des moyens de blocage.

Comme cela est représenté, cet organe de moyens de blocage peut comporter un tirant désigné par la référence générale 11 sur ces figures, s'étendant entre ces deux biellettes de suspension et dont les extrémités sont associées aux moyens de blocage 8 en position.

Ces moyens de blocage permettent alors de serrer les biellettes de suspension contre le corps et plus particulièrement contre un organe de montage 12 de ce corps, traversé par le tirant 11, afin de bloquer celui-ci en position.

Différents modes de réalisation des moyens de blocage sont connus dans l'état de la technique.

On notera simplement que ces moyens de blocage sont par exemple manoeuvrables par un utilisateur, grâce à un levier désigné par la référence générale 13, permettant de déplacer ceux-ci entre des positions de verrouillage et de déverrouillage de la position du corps.

On conçoit alors que le tirant 11 des moyens de blocage est relié à la pièce de montage 12 du corps de colonne de direction 1 et suit les déplacements de celui-ci lors de ses réglages.

Les moyens d'accrochage 6 de l'autre extrémité du corps de colonne 1 sur la structure de support 5 comportent quant à eux par exemple au moins une biellette d'articulation de cette extrémité correspondante de ce corps sur cette structure.

Avantageusement, ces moyens d'accrochage du corps sur la structure de support comportent également deux biellettes d'articulation disposées par exemple symétriquement de part et d'autre du corps et dont l'une est désignée par la référence générale 14 sur la figure 1.

On notera également que de façon classique, le corps de colonne 1 peut comporter deux portions télescopiques l'une dans l'autre et dans ce cas, la ou chaque biellette de suspension 9,10 est reliée à la portion de corps de colonne la plus proche de l'extrémité de l'arbre de direction adaptée pour recevoir le volant.

Cependant, ce corps de colonne 1 peut également être monté déplaçable à coulissement axial, comme cela sera décrit plus en détail par la suite, par rapport à des moyens de guidage correspondants des moyens d'accrochage 6 de l'extrémité correspondante de ce corps sur la structure.

L'arbre de direction peut quant à lui comporter de façon classique, deux portions télescopiques l'une dans l'autre.

On conçoit alors que dans ce cas, lorsqu'un utilisateur déplace les moyens de blocage vers leur position de déverrouillage, il peut régler en position axiale et angulaire le volant de direction en déplaçant celui-ci.

Les déplacements du volant et donc de l'arbre et du corps de colonne, sont alors possible par déplacement par exemple des extrémités correspondantes du tirant 11 des moyens de blocage 8 dans les lumières correspondantes des biellettes de suspension 9 et 10 par exemple.

Ceci permet alors de régler la position angulaire du volant.

Le réglage en position axiale de celui-ci peut être obtenu soit par coulissement des deux portions de corps l'une dans l'autre, si le corps comporte deux portions télescopiques, soit par coulissement de ce corps par rapport aux moyens de guidage prévus dans les moyens d'articulation 6 de l'autre extrémité du corps par rapport au reste de la structure de support.

On conçoit alors que dans ce cas, les moyens de blocage 8 suivent tous les déplacements du corps de colonne, ce qui facilite l'intégration d'un tel ensemble dans un véhicule automobile.

Il va de soi bien entendu que les moyens de réglage 7 peuvent également être interposés entre la ou chaque biellette de suspension et la structure de support.

Une telle structure est représentée sur la figure 3, dans laquelle les mêmes numéros de référence désignent des pièces identiques ou analogues à celles déjà décrites en regard des figures 1 et 2.

C'est ainsi qu'on reconnaît sur cette figure 3, le corps de colonne 1, l'arbre de direction 2, les extrémités 3 et 4 de celui-ci, la structure de support 5, les moyens d'accrochage 6, les moyens de réglage 7, les moyens de blocage 8 et l'une des biellettes de suspension du corps par rapport au reste de la structure de support 5, désignée par la référence générale 9.

On conçoit alors que dans l'exemple de réalisation représenté sur cette figure 3, les moyens de réglage 7 sont interposés entre la biellette de suspension 9 et la structure de support 5.

Dans ce cas, les moyens de blocage 8 sont solidaires de cette structure de support 5 et l'extrémité correspondante de la biellette de suspension 9 comporte la lumière 9a de passage de l'organe de ces moyens de blocage, ces moyens de blocage étant déplaçables entre des positions de verrouillage et de déverrouillage pour permettre le réglage en position du corps.

On conçoit alors que dans ce cas, les moyens de blocage 8 restent fixes en position par rapport à la structure de support et ne suivent pas les déplacements du corps de colonne lors des réglages en position du volant.

Ceci facilite l'implantation de ces moyens par exemple dans la planche de bord du véhicule.

On a indiqué précédemment que les moyens d'articulation 6 de l'extrémité correspondante du corps de colonne 1 sur le reste de la structure de support 5 pouvaient comporter des biellettes d'articulation telles que la biellette 14.

Il a également été mentionné précédemment que ces moyens d'articulation pouvaient comporter deux biellettes d'articulation comme par exemple les biellettes désignées par les références générales 14 et 15 sur la figure 4.

Ces biellettes d'articulation sont donc articulées à une extrémité, sur la structure de support 5 et comportent par exemple à l'autre extrémité, des moyens de guidage tels qu'un palier désigné par la référence générale 16, permettant de recevoir le corps de colonne désigné par la référence générale 1.

De façon classique, ce corps peut alors par exemple être monté déplaçable à coulissement axial entre des flasques latéraux 16a et 16b de ce palier 16.

Il va de soi bien entendu que différents modes de réalisation de ces moyens d'articulation et de ce palier peuvent être envisagés.

Un autre mode de réalisation encore de l'ensemble selon l'invention est représenté sur les figures 5 et 6, dans lesquelles des numéros de référence identiques désignent des pièces identiques ou analogues à celles déjà décrites.

C'est ainsi en effet qu'on reconnaît sur ces figures 5 et 6, le corps de colonne de direction 1, l'arbre de direction 2, les extrémités 3 et 4 de celui-ci, la structure de support 5, les moyens d'articulation 6, les moyens de réglage 7 avec les moyens de blocage 8 et au moins une biellette de suspension 9 de l'extrémité correspondante de ce corps de colonne sur la structure de support 5.

Dans cet exemple, les moyens d'articulation 6 comportent toujours au moins une biellette d'articulation 14 de l'extrémité correspondante du corps de colonne 1 sur le reste de la structure de support 5.

Cependant, dans cet exemple de réalisation, cette biellette ou chaque biellette d'articulation de ces moyens d'articulation 6 comporte par exemple une patte s'étendant en direction des moyens de réglage 7, et désignée par la référence générale 17 sur ces figures.

En fait, chaque patte 17 de ces moyens d'articulation 6 peut comporter une lumière de passage de l'organe par exemple 11 des moyens de blocage 8, cette lumière étant désignée par la référence générale 17a et s'étendant par exemple à peu près parallèlement à l'axe de l'arbre de direction 1.

On conçoit alors que le tirant 11 des moyens de blocage 8 est monté déplaçable dans la lumière 9a par exemple des biellettes de suspension 9 et dans la lumière 17a par exemple des pattes 17 s'étendant à partir des biellettes d'articulation par exemple 14 et que ces moyens de blocage sont adaptés pour, en position de verrouillage, assurer le blocage en position du corps de colonne par serrage de cette biellette et de cette patte contre la pièce de montage 12 du corps de colonne 1.

Ceci permet d'améliorer encore la fiabilité de fixation du corps de colonne sur le reste de la structure de support.

Enfin, on notera que des moyens d'équilibrage du corps en position, de type classique, peuvent être prévus entre la structure de support et le corps de colonne de même que des moyens d'absorption d'énergie de choc par contrôle des déplacements de ce corps ou d'une partie de celui-ci par rapport à cette structure.

Ces moyens pouvant présenter n'importe qu'elle structure connue appropriée, on ne les décrira pas dans le détail par la suite.

Il va de soi bien entendu que différents modes de réalisation encore de cet ensemble de colonne peuvent être envisagés.

## Revendications

1. Ensemble de colonne de direction réglable en position par exemple pour véhicule automobile, du type comportant un corps de colonne de direction (1) dans lequel est disposé un arbre de direction (2) et relié à proximité de chacune de ses extrémités à des moyens de fixation sur une structure de support (5) associée au reste de la structure du véhicule et comportant les uns, des moyens d'accrochage (6) sur cette structure, et les autres, des moyens de réglage (7) en position du corps (1) par rapport à cette structure (5), munis de moyens de blocage (8) en position, déplaçables entre des positions de verrouillage et de déverrouillage pour permettre un réglage en position du corps (1) et donc de l'ensemble de colonne, caractérisé en ce que les moyens de fixation de l'extrémité du corps de colonne (1) sur la structure de support (5), associée aux moyens de réglage (7), comportent au moins une biellette (9,10) de suspension du corps sur la structure de support, dont les extrémités sont articulées l'une par rapport au corps (1) et l'autre par rapport à la structure de support (5), en ce que les moyens de réglage (7) de la position du corps sont interposés entre cette biellette (9,10) et une pièce correspondante de l'ensemble de colonne, corps de colonne (1) ou structure de support (5), et en ce que l'extrémité correspondante de la biellette de suspension (9,10) est articulée autour d'un organe (11) de ces moyens de réglage.

2. Ensemble selon la revendication 1, caractérisé en ce que les moyens de réglage (7) sont interposés entre la ou chaque biellette de suspension (9,10) et le corps de colonne de direction (1).

3. Ensemble selon la revendication 2, caractérisé en ce que les moyens de blocage (8) sont solidaires du corps (1), en ce que l'extrémité correspondante de la ou chaque biellette de suspension (9,10) comporte une lumière (9a) de passage de l'organe correspondant (11) des moyens de blocage (8) et en ce que les moyens de blocage (8) sont adaptés pour, en position de déverrouillage, autoriser un déplacement relatif de la ou chaque biellette de suspension (9,10) par rapport à l'organe (11), par déplacement relatif de l'organe dans la lumière de cette biellette, afin de permettre un réglage en position du corps, et en position de verrouillage, immobiliser la ou chaque biellette de suspension par rapport à l'organe de ces moyens de blocage afin de bloquer le corps et donc l'ensemble de colonne en position.

4. Ensemble selon la revendication 1, caractérisé en ce que les moyens de réglage (7) sont interposés entre la ou chaque biellette de suspension (9,10) et la structure de support (5).

5. Ensemble selon la revendication 4, caractérisé en ce que les moyens de blocage (8) sont solidaires de la structure de support (5), en ce que l'extrémité correspondante de la ou chaque biellette de suspension (9,10) comporte une lumière (9a) de passage de l'organe correspondant (11) des moyens de blocage (8) et en ce que les moyens de blocage (8) sont adaptés pour, en position de déverrouillage, autoriser un déplacement relatif de la ou chaque biellette de suspension (9,10) par rapport à l'organe (11), par déplacement relatif de l'organe dans la lumière de cette biellette, afin de permettre un réglage en position du corps, et en position de verrouillage, immobiliser la ou chaque biellette de suspension par rapport à l'organe de ces moyens de blocage afin de bloquer le corps et donc l'ensemble de colonne en position.

6. Ensemble selon l'une quelconque des revendications précédentes, caractérisé en ce que les moyens de blocage (8) comprennent des moyens de serrage de la ou chaque biellette de suspension (9,10) entre ceux-ci et des moyens de montage (12) de la pièce correspondante, corps de colonne (1) ou structure de support (5).

7. Ensemble selon l'une quelconque des revendications précédentes, caractérisé en ce que les moyens de fixation de l'extrémité correspondante du corps de colonne (1) comprennent au moins deux biellettes de suspension (9,10) disposées de part et d'autre du corps de colonne (1) et en ce que l'organe des moyens de blocage comporte un tirant (11) s'étendant entre ces deux biellettes et dont les extrémités sont associées aux moyens de blocage (8) en position.

8. Ensemble selon la revendication 7, caractérisé en ce que les deux biellettes (9,10) sont disposées symétriquement de part et d'autre du corps (1).

9. Ensemble selon l'une quelconque des revendications précédentes, caractérisé en ce que les moyens d'accrochage (6) du corps de colonne sur la structure de support (5) comportent au moins une biellette (14,15) d'articulation de l'extrémité correspondante de celui-ci sur cette structure.

10. Ensemble selon la revendication 9, caractérisé en ce que les moyens d'accrochage du corps sur la structure de support comportent deux biellettes d'articulation (14,15) disposées de part et d'autre du corps (1).

11. Ensemble selon la revendication 10, caractérisé en ce que les deux biellettes d'articulation (14,15) sont disposées symétriquement de part et d'autre du corps.

12. Ensemble selon l'une quelconque des revendications précédentes, caractérisé en ce que le corps de colonne (1) comporte deux portions télescopiques l'une dans l'autre.

13. Ensemble selon les revendications 3 ou 5 et 12, caractérisé en ce que le ou chaque biellette de suspension (9,10) est reliée à la portion de corps (1) de colonne la plus proche de l'extrémité (7) de l'arbre de direction adaptée pour recevoir le volant.

14. Ensemble selon l'une quelconque des revendications 1 à 11, caractérisé en ce que le corps de colonne (1) est monté déplaçable à coulissement axial par rapport à des moyens de guidage correspondants (16) des moyens d'accrochage (6) de l'extrémité correspondante du corps sur la structure.

15. Ensemble selon l'une quelconque des revendications précédentes, caractérisé en ce que l'arbre de direction comporte deux portions télescopiques l'une dans l'autre.

16. Ensemble selon l'une quelconque des revendications précédentes, caractérisé en ce que les moyens d'accrochage (6) comprennent au moins une patte (17) s'étendant en direction des moyens de réglage (8) et munie d'une lumière (17a) de passage de l'organe (11) des moyens de blocage (8).

17. Ensemble selon la revendication 16, caractérisé en ce que ladite lumière (17a) est à peu près parallèle à l'axe de l'arbre de direction.

18. Ensemble selon les revendications 9 ou 10 et 16 ou 17, caractérisé en ce que la ou chaque biellette d'articulation (14,15) comporte une patte s'étendant en direction des moyens de réglage (8).

19. Ensemble selon l'une quelconque des revendications précédentes, caractérisé en ce qu'il comporte des moyens d'absorption d'énergie de choc par contrôle des déplacements relatifs d'au moins une partie de celui-ci par rapport à la structure de support.

20. Ensemble selon l'une quelconque des revendications précédentes, caractérisé en ce qu'il comporte des moyens d'équilibrage en position du corps par rapport à la structure de support.
